# EUROPEAN PATENT APPLICATION

(11) **EP 2 692 934 A2**
(43) Date of publication of application: **05.02.2014**
(21) Application number: 12764840.0
(22) Date of filing: 27.03.2012
(51) Int. Cl.: D06F 37/22, F16F 15/10, D06F 39/12

(54) **DRUM WASHING MACHINE**

(30) Priority: 28.03.2011 KR 20110027481
(71) Applicant: Daewoo Electronics Corporation, Seoul 100-031 (KR)
(72) Inventor: HWANG, Ui Kun, Bucheon-si Gyeonggi-do 420-861 (KR)
(74) Representative: Michalski Hüttermann & Partner Patentanwälte
(86) International application number: PCT/KR2012/002215
(87) International publication number: WO 2012/134144

(57) **Abstract**

Disclosed is a drum washing machine, including a cabinet; a tub fillable with wash water; a drum receiving laundry; a motor at the rear of a lower portion of the tub and close to one side from a left and right center of the tub; one balancer affixed or coupled to a front surface of the tub so that the center of gravity thereof is biased toward an opposite side of the motor from the left and right center of the tub; a spring having one end affixed or coupled to the cabinet and the other end affixed or coupled to an upper surface of the tub to support the tub; and a damper having one end affixed or coupled to the cabinet and another end affixed or coupled to a lower surface of the tub.

## Description

### [Technical Field]

The present invention relates to a drum washing machine, and more particularly, to a drum washing machine capable of decreasing vibrations using a balancer.

### [Background Art]

A washing machine uses power from an electric motor as main power, and performs washing, rinsing, and dehydrating processes to remove stains on laundry.

The washing machine includes an electric motor, which is a power apparatus, a mechanical part transferring energy to the laundry, a controlling part controlling the washing process, a water supply apparatus, a water draining apparatus, and the like.

Washing machines may be classified into agitator type washing machines, pulsator type washing machines, and a drum type washing machines, depending on their washing scheme. The agitator type washing machine performs washing by horizontally rotating a spiral agitator at the center of a tub. The pulsator type washing machine performs washing using a water flow generated by rotating a disk shaped pulsator. The drum type washing machine performs washing using impact generated when the laundry is lifted by a lifter in the drum and then dropped into the wash water and detergent as a result of rotating the drum around a horizontal axis.

The above-mentioned technical configurations are background technology for helping to understand the present invention, and do not necessarily mean related art well known in the art to which the present invention pertains.

### [Disclosure]

### [Technical Problem]

In accordance with the related art, at least two balancers to decrease vibrations of the drum washing machine are used, and thus the manufacturing cost of the drum washing machine is increased.

Therefore, there is a need to solve the problem.

The present invention can solve such problems of the related art, and an aspect of the invention is to provide a drum washing machine capable of saving costs and decreasing vibrations using one balancer.

### [Technical Solution]

In accordance with various aspects of the invention, a drum washing machine includes a cabinet; a tub in the cabinet and fillable with wash water; a rotatable drum in the tub and configured to receive laundry; a motor at a lower rear portion of the tub, on a left or right side of the tub, and configured to generate power; a motor pulley connected to the motor; a drum pulley connected to the drum; a belt around the motor pulley and the drum pulley so that the motor rotates the drum; one balancer on a front surface of the tub so that a center of gravity thereof is biased toward the other of the left and right sides of the tub; a spring having one end affixed or coupled to the cabinet and another end affixed or coupled to an upper surface of the tub to support the tub; and a damper having one end affixed or coupled to the cabinet and another end affixed or coupled to a lower surface of the tub.

When facing a front of the drum washing machine, the motor may be close to the left side of the tub, and the balancer may be on the front surface of the tub so that the center of gravity thereof is on the right side of the tub.

The balancer may include a horizontal part which is affixed or coupled to a lower portion of the front surface of the tub and is horizontally aligned with a lower surface plate of the cabinet; and a vertical part which is affixed or coupled to the right of the front surface of the tub and extends up from the horizontal part (e.g., a right end of the horizontal part).

The balancer may have an L shape.

The horizontal part and the vertical part may be integrally formed.

The spring may be affixed or coupled to the upper surface of the tub at the center of gravity of the tub on which the balancer and the motor are mounted.

A weight of the balancer may be greater than that of the motor, and the spring may be positioned to a front half of the upper surface of the tub.

The damper may be affixed or coupled to a lower surface of the tub behind the spring.

The damper may be affixed or coupled to the lower surface of the tub at a center of the tub.

### [Advantageous Effects]

In accordance with embodiment(s) of the present invention, since vibrations may be decreased using only one balancer, the assembling process for the drum washing machine may be simplified, and the manufacturing cost may be decreased.

Further, in accordance with embodiment(s) of the present invention, since a motor, which is a weight body, is at the rear of the tub, and the balancer is attached to the front surface of the tub, a weight unbalance in the front-to-rear direction may be solved, thereby decreasing vibrations.

Further, in accordance with embodiment(s) of the present invention, since the motor is on one side the tub and the balancer is on an opposite side of the tub from the motor, a weight unbalance in the left-to-right direction may be solved, thereby decreasing vibrations.

Further, in accordance with embodiment(s) of the present invention, horizontal and vertical parts or portions of the balancer are manufactured by a one-time process, thereby simplifying the manufacturing process and reducing the manufacturing cost.

Further, in accordance with embodiment(s) of the present invention, a spring is affixed or coupled to an upper surface of a tub at a center of gravity of the tub on which the balancer and motor are mounted, thereby improving the ability to absorb vibrations occurring as a result of movement of the tub.

Further, in accordance with embodiment(s) of the present invention, a damper is at the rear and/or at the center of gravity of the tub to damp vibrations at the rear of the tub, thereby improving a vibration damping effect.

### [Description of Drawings]

The above and other aspects, features and advantages of the invention will become apparent from the following detailed description in conjunction with the accompanying drawings, in which:
Fig. 1 is a side cross-sectional view of a drum washing machine in accordance with one or more embodiments of the present invention;
Fig. 2 is a perspective view of the drum washing machine in accordance with embodiment(s) of the present invention;
Fig. 3 is a front view of the drum washing machine in accordance with embodiment(s) of the present invention; and
Fig. 4 is a bottom perspective view of the drum washing machine in accordance with embodiment(s) of the present invention.

### [Detailed Description]

Hereinafter, a drum washing machine in accordance with embodiment(s) of the present invention will be described with reference to the accompanying drawings. In the present description, thicknesses of lines, sizes of components, or the like, illustrated in the accompanying drawings may be exaggerated for clarity and convenience of explanation.

Further, the following terminologies are defined in consideration of the functions in the present invention and may be construed in different ways by the intention of users and operators. Therefore, the definitions of terms used in the present description should be construed based on the contents throughout the specification.

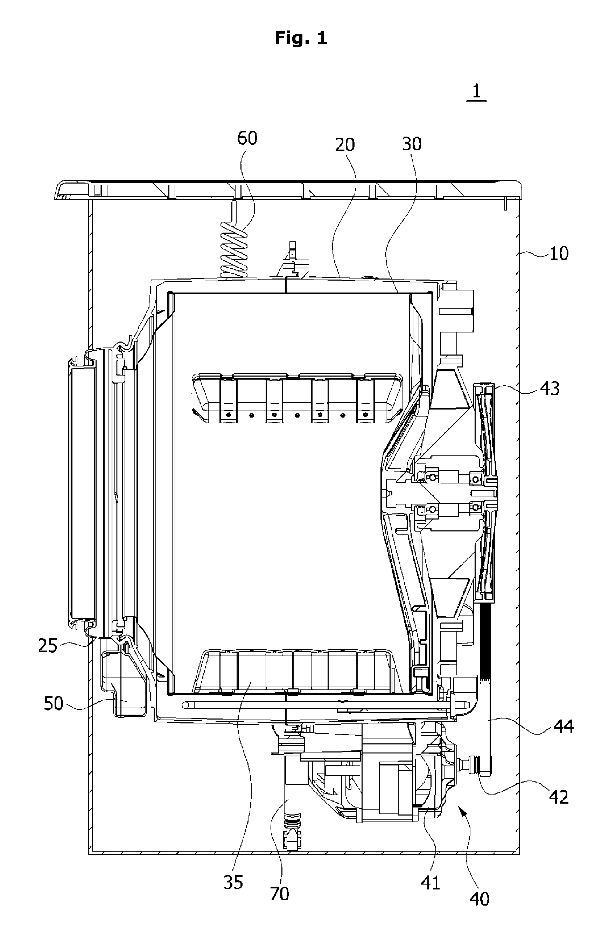

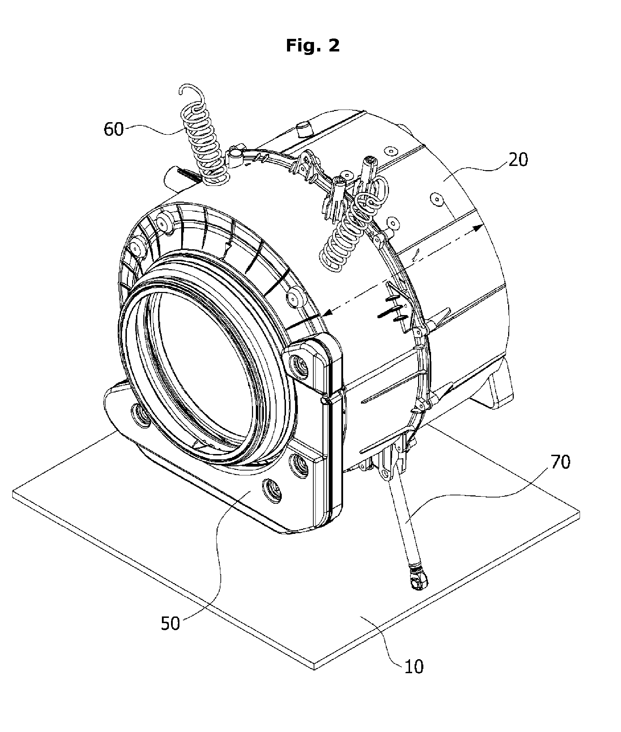

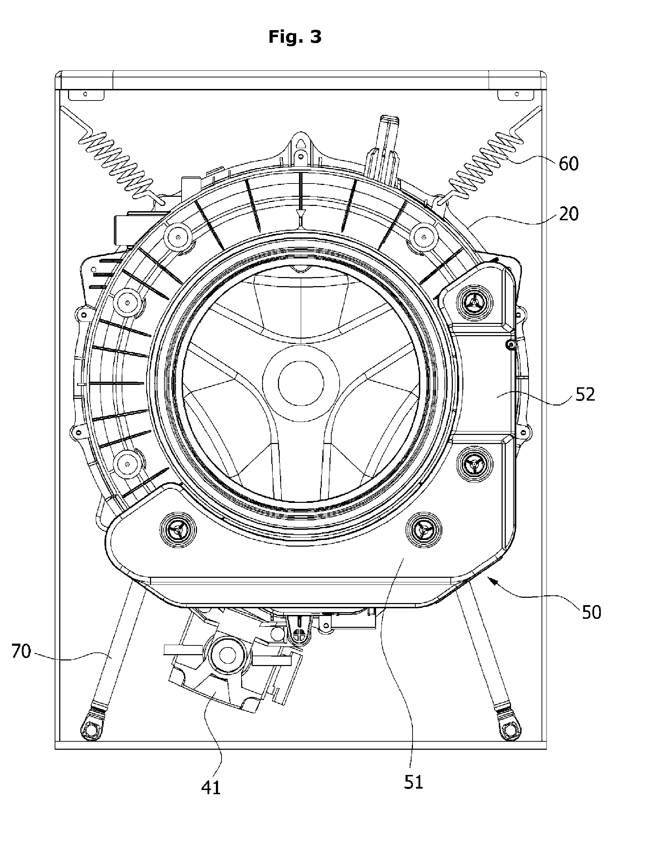

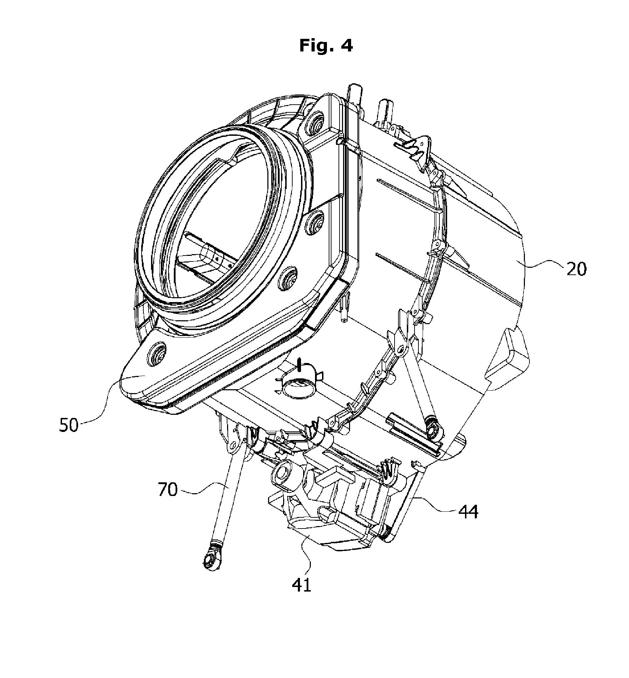

Fig. 1 is a side cross-sectional view of a drum washing machine in accordance with embodiment(s) of the present invention; and Fig. 2 is a perspective view of the drum washing machine in accordance with embodiment(s) of the present invention. Fig. 3 is a side cross-sectional view of a drum washing machine in accordance with embodiment(s) of the present invention; and Fig. 4 is a bottom perspective view of the drum washing machine in accordance with embodiment(s) of the present invention.

As illustrated in Figs. 1 to 4, the drum washing machine 1 includes a cabinet 10 that forms an outer appearance of the drum washing machine 1 and protects the components inside the drum washing machine 1, a tub 20 positioned between front and rear plates (based on Fig. 1) of the cabinet 10 that can be at least partially filled with wash water, a rotatable drum 30 positioned horizontally in the tub 20 and configured to receive laundry therein, a driving part 40 that generates power and rotates the drum 30, a balancer 50 affixed or coupled to a front surface of the tub 20, springs 60 that absorb vibrations of the tub 20, and a damper 70 that damps or reduces the vibrations of the tub 20.

The front plate of the cabinet 10 is provided with a laundry introducing and discharging hole (not illustrated) through which laundry is introduced and discharged or removed. A door (not illustrated) that can be opened and closed is positioned over the laundry introducing and discharging hole.

The tub 20 is mounted in the cabinet 20 and has a hollow cylindrical shape that lies laterally. The rear of the laundry introducing and discharging hole has an opening hole (not illustrated).

An upper portion of the tub 20 is provided with a water supplying apparatus (not illustrated) that supplies the wash water into the tub 20 and a detergent housing (not illustrated) that supplies detergent. The tub 20 has the drum 30 rotatably disposed therein.

The drum 30 has a hollow cylindrical shape that is laterally laid and/or that has a horizontal axis, similar to the tub 20, and includes an opening and/or hole (not illustrated) at the rear of the laundry introducing and discharging hole. The drum 30 has holes (not illustrated) in the cylindrical side thereof so that the wash water in the tub 20 may be introduced thereinto and discharged therefrom. The drum 30 also has one or more lifters 35 on an inner circumferential surface thereof so as to move the laundry as described herein.

The driving part 40 generates the power to rotate the drum 30. The driving part 40 includes a motor 41, a motor pulley 42, a drum pulley 43, and a belt 44.

The motor 41 is disposed at the rear of a lower portion of the tub 20 (see Fig. 1) and generates the power.

The motor pulley 42 is connected to the motor 41, the drum pulley 43 is connected to the drum 30, and the belt 44 is secured around the motor pulley 42 and the drum pulley 43.

A rotational force generated by the motor 41 is transferred to the motor pulley 42. Then, the rotational force is transferred to the drum pulley 42 at the rear of the drum 30 through the belt 44, and the drum 30 is rotated. The motor pulley 42 and the drum pulley 43 may have longitudinal grooves in central portions thereof to prevent the belt 44 from separating from the pulleys.

When an unbalanced mass occurs during the rotation of the drum 30, vibrations inevitably occur.

The balancer 50 includes a body having a predetermined mass and a housing having an internal space configured to guide movement of the body, in order to rapidly decrease vibrations of the drum 30.

The balancer 50 is affixed or coupled to the front surface of the tub 20 (see Fig. 1). The reason why the balancer 50 is affixed or coupled to the front surface of the tub 20 as described above is to have a location or position that corresponds to the location or position of the motor 41 at the rear of the tub 20. That is, since the motor 41 having a weight is at the rear of the tub 20 and/or offset from a central vertical axis bisecting the tub 20, the balancer 50 is positioned on the front surface of the tub 20 in order to reduce, minimize or eliminate a weight unbalance due to the weight of the motor 41.

The motor 41 is on one side (e.g., the left or right side), close to center of the tub 20. Herein, the center of the tub 20 means a center plane or axis which equally divides a left portion of the tub 20 and a right portion of the tub 20 as viewed from the front of the washing machine (e.g., the view in Fig. 3).

In accordance with one embodiment of the present invention, the motor 41 is on the left side, close to the center of the tub 20 (see Fig. 3). The balancer 50 is located or positioned so that the center of gravity of the balancer 50 is biased toward the right side of the tub 20, opposite to the motor 41.

That is, the balancer 50 is placed so that the center of gravity of the balancer 50 is on an opposite side of the tub from the motor 41 and close to the center of the tub 20. Therefore, the tub 20 is horizontally balanced by biasing the weight of the motor 41 toward one side (e.g., the left) and the biasing the center of gravity of the balancer 50 toward the other side (e.g., the right).

The balancer 50 includes a horizontal part or portion 51 and a vertical part or portion 52. The horizontal part or portion 51 is affixed or coupled to a lower portion of a front surface of the tub 20 and is horizontally disposed or aligned over a lower surface plate of the cabinet 10 (see Fig. 3).

The vertical part or portion 52 is affixed or coupled to the right of the front surface of the tub 20. The vertical part 52 may extend up from an end (e.g., a right end) of the horizontal part.

The horizontal part or portion 51 and the vertical part or portion 52 are integrally formed. By doing so, the horizontal part or portion 51 and the vertical part or portion 52 may be manufactured in a single or one-time process, thereby simplifying the manufacturing process and reducing the manufacturing cost.

The horizontal part or portion 51 and the vertical part or portion 52 may have an L shape that enables the center of gravity of the balancer 50 to be biased toward one side of the tub 20 (e.g., to the right). The balancer 50 may also have another shape apart from or in addition to the above-mentioned shapes, as long as the center of gravity of the balancer 50 is biased toward the right.

The springs 60 have an upper end affixed or coupled to an upper end portion of a side plate or panel of the cabinet 10 and a lower end affixed or coupled to an upper surface of the tub 20. Therefore, the springs 60 support the tub 20 and absorb the vibrations of the tub 20 (e.g., that may occur at the time of a dehydration cycle.

The number of springs 60 may be plural. In the embodiment, two springs 60 are provided, in which one spring is affixed or coupled to the left side of the tub 20 and the other spring is affixed or coupled to the right side of the tub 20, respectively, to absorb the vibrations due to horizontal and/or vertical movement of the tub 20.

The springs 60 are affixed or coupled to the upper surface of the tub 20 at a center of gravity of the tub 20. Here, the center of gravity of the tub 20 means the center of gravity when the balancer 50 and the motor 41 are mounted on the tub 20, rather than the center of gravity of only the tub 20 itself.

The spring 60 may be positioned at the center of gravity of the tub 20 in the front-to-rear direction so that the tub 20 is balanced in the front-to-rear direction. In accordance with such an embodiment, the lower end of the spring 60 is affixed or coupled to the tub 20 at the center of gravity of the tub 20 in the front-to-rear direction, and the upper end of the spring 60 is affixed or coupled to the cabinet 10 at the same position in the front-to-rear direction as that of the lower end of the spring 60 (see Fig. 1).

A weight of the balancer 50 is greater than that of the motor 41. In accordance with the present embodiment, the weight of the motor 41 may be about 5 kg, and the weight of the balancer 50 may be about 9 kg.

Since the balancer 50 is heavier than the motor 41, the center of gravity of the tub 20 on which both of the motor 41 and the balancer 50 are mounted is in front of the center of the tub 20 in the front-to-rear direction.

Therefore, the spring 60 may be affixed or coupled to the upper surface of the tub 20 at a position in front of the center of the tub 20.

The dampers 70 have an upper end affixed or coupled to the lower surface of the tub 20 and a lower end affixed or coupled to a lower surface plate of the cabinet 10. Therefore, the dampers 70 damp or reduce the vibrations of the tub 20 during the dehydration cycle.

The number of dampers 70 may be plural. In the embodiment shown in Fig. 3, two dampers 70 are provided, in which one damper is affixed or coupled to the left side of the tub 20 and the other damper is affixed or coupled to the right of the tub 20, respectively, to dampen or reduce the vibrations due to horizontal and/or vertical movement of the tub 20.

The damper 70 is affixed or coupled to the lower surface of the tub 20 behind the spring 60 (see Fig. 1).

In accordance with one or more embodiment(s), the damper 70 is affixed or coupled to the lower surface of the tub 20 at the center along the front-to-rear direction of the tub 20 (see Fig. 4).

Since the spring 60 is positioned ahead of the center of the tub 20 along the front-to-rear direction, and a front end of the tub 20 is fixed to a gasket 25, when an unbalanced mass results from rotation of the drum at the time of the dehydration cycle, relatively large vibrations may be generated at the rear of the tub 20, as compared to the front of the tub 20.

Therefore, the damper 70 may be positioned behind the center of gravity of the tub 20 to dampen or reduce the vibrations at the rear of the tub 20, thereby making it possible to further improve a vibration damping effect.

When the damper 70 is excessively close to the rear of the tub 20, the damping rate for vibrations at the front of the tub 20 is decreased. Thus, the damper 70 may be advantageously located at the center along the front-to-rear direction of the tub 20 so as to dampen or reduce the vibrations at both of the front and the rear of the tub 20.

The lifter(s) 35 are on the inner circumferential surface of the drum 30 and face or point toward a central portion of the drum 30. The lifter(s) 35 lift the laundry in the drum 30 as the drum 30 rotates.

Hereinafter, an operation principle of the drum washing machine in accordance with embodiment(s) of the present invention will be described.

After the laundry is placed in the drum 30, one or more buttons, dials and/or selections on an operating panel (not shown) may be pushed, turned or selected to operate the drum washing machine 1. As a washing cycle starts, the wash water is supplied to the tub 20 and is also introduced into the drum 30 through the holes in the drum cylinder.

The motor 40 is driven to rotate the drum 30, and the laundry in the drum 30 is lifted by the lifter 35 fixed to the inner circumferential surface of the drum 30. The laundry then drops down into the wash water in the tub 20 and drum 30.

In the drum washing machine 1, large vibrations may be generated at the time of the dehydration cycle, among several washing cycles. These vibrations are reduced (e.g., rapidly decreased) by the balancer 50, located at a position corresponding to and/or balancing that of the motor 41.

The vibrations generated at the time of the rotation of the drum 30 are also decreased by the spring 60 and the damper 70, in addition to the balancer 50. The spring 60 is positioned ahead of the center of the front-to-rear length of the tub 20 when the weight of the balancer 50 is greater than that of the motor 41 to maintain of the balance of the tub 20 in the front-to-rear direction. The damper 70 is affixed or coupled to the tub 20 behind the spring 60 to offset any increase in vibrations at the rear of the tub 20 caused by a forward shift of the center of gravity of the tub 20.

With the above-mentioned configuration(s), a single balancer 50 may sufficiently decrease the vibrations of the drum washing machine 1 during the dehydration cycle. Therefore, the process of assembling the balancer 50 may be simplified and the manufacturing cost may be decreased as compared with the related art where a plurality of balancers are provided.

Although the embodiments of the present invention have been described in detail, they are only examples. It will be appreciated by those skilled in the art that various modifications and equivalent other embodiments are possible from the present invention. Therefore, the scope of the present invention is to be defined by the following claims.

## Claims

1. A drum washing machine, comprising:
a cabinet;
a tub in the cabinet and fillable with wash water;
a rotatable drum in the tub and configured to receive laundry;
a motor at a rear lower portion of the tub, on a left or right side of the tub, and configured to generate power;
a motor pulley connected to the motor;
a drum pulley connected to the drum;
a belt around the motor pulley and the drum pulley so that the motor rotates the drum;
a balancer on or coupled to a front surface of the tub, so that a center of gravity thereof is biased toward the other of the left and right sides of the tub;
a spring having one end affixed or coupled to the cabinet and another end affixed or coupled to an upper surface of the tub to support the tub; and
a damper having one end affixed or coupled to the cabinet and the other end affixed or coupled to a lower surface of the tub.

2. The drum washing machine according to claim 1, wherein the motor is on the left side of the tub when facing a front of the drum washing machine, and the balancer is on the front surface of the tub so that the center of gravity thereof is biased to the right side of the tub when facing the front of the drum washing machine.

3. The drum washing machine according to claim 2, wherein the balancer includes:
a horizontal part which is affixed or coupled to the lower portion of the front surface of the tub; and
a vertical part which is affixed or coupled to a right side of the front surface of the tub.

4. The drum washing machine according to claim 3, wherein the balancer has an L shape.

5. The drum washing machine according to claim 4, wherein the horizontal part and the vertical part are integrally formed.

6. The drum washing machine according to claim 4, wherein the spring is affixed or coupled to the upper surface of the tub at the center of gravity of the tub.

7. The drum washing machine according to claim 6, wherein a weight of the balancer is greater than a weight of the motor, and
the spring is affixed or coupled to a front half of the upper surface of the tub.

8. The drum washing machine according to claim 7, wherein the damper is affixed or coupled to a lower surface of the tub behind the spring.

9. The drum washing machine according to claim 8, wherein the damper is affixed or coupled to the lower surface of the tub at a center of the tub.
